# EUROPEAN PATENT SPECIFICATION

(11) **EP 3 954 101 B1**
(45) Date of publication and mention of the grant of the patent: **11.11.2026**
(21) Application number: 20716954.1
(22) Date of filing: 03.04.2020
(51) Int. Cl.: H04L 9/40, H04L 9/32, H04L 9/00

(54) **COMPUTER IMPLEMENTED METHOD AND SYSTEM FOR KNOWLEDGE PROOF IN BLOCKCHAIN TRANSACTIONS**
COMPUTERIMPLEMENTIERTES VERFAHREN UND SYSTEM FÜR WISSENSBEWEIS IN BLOCKCHAIN-TRANSAKTIONEN
PROCÉDÉ ET SYSTÈME MIS EN OEUVRE PAR ORDINATEUR POUR PREUVE DE CONNAISSANCES DANS DES TRANSACTIONS DE CHAÎNE DE BLOCS

(30) Priority: 12.04.2019 GB 201905198
(43) Date of publication of application: 16.02.2022
(73) Proprietor: nChain Licensing AG, 6300 Zug (CH)
(72) Inventor: WRIGHT, Craig Steven, Cardiff CF10 2HH (GB); MACKAY, Alexander Tennyson, Cardiff CF10 2HH (GB); ZHANG, Wei, Cardiff CF10 2HH (GB)
(74) Representative: Gill Jennings & Every LLP
(86) International application number: PCT/IB2020/053214
(87) International publication number: WO 2020/208491

(56) References cited:
- THADDEUS DRYJA: "Discreet Log Contracts", 15 July 2017 (2017-07-15), XP055590383, Retrieved from the Internet <URL:https://adiabat.github.io/dlc.pdf> [retrieved on 20190520]
- ORLANDI CLAUDIO ED - ANDO N ET AL: "Faster Zero-Knowledge Protocols and Applications", 29 October 2017, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 1 - 11, ISBN: 978-3-642-17318-9, XP047452172
- SCHNORR C P ED - ANDO N ET AL: "Efficient Identification and Signatures for Smart Cards", 1990, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 239 - 252, ISBN: 978-3-642-17318-9, XP047288139
- ARAM JIVANYAN: "Lelantus: Towards Confidentiality and Anonymity of Blockchain Transactions from Standard Assumptions", vol. 20190414:031815, 7 April 2019 (2019-04-07), pages 1 - 24, XP061032053, Retrieved from the Internet <URL:http://eprint.iacr.org/2019/373.pdf> [retrieved on 20190407]
- ANONYMOUS: "Powers of 2 to required sum - GeeksforGeeks", 24 April 2018 (2018-04-24), XP055720535, Retrieved from the Internet <URL:https://www.geeksforgeeks.org/powers-2-required-sum/> [retrieved on 20200805]
- ANONYMOUS: "exponentiation - Is there an algorithm to split a number into the sum of powers of 2? - Mathematics Stack Exchange", 2 February 2018 (2018-02-02), XP055720549, Retrieved from the Internet <URL:https://math.stackexchange.com/questions/1553894/is-there-an-algorithm-to-split-a-number-into-the-sum-of-powers-of-2> [retrieved on 20200805]
- ANONYMOUS: "Add two numbers without using arithmetic operators - GeeksforGeeks", 17 March 2012 (2012-03-17), XP055720575, Retrieved from the Internet <URL:https://www.geeksforgeeks.org/add-two-numbers-without-using-arithmetic-operators/> [retrieved on 20200805]
- ANONYMOUS: "Find sum of two numbers using only bitwise operators - PrismoSkills", 1 January 2019 (2019-01-01), XP055720576, Retrieved from the Internet <URL:https://prismoskills.appspot.com/lessons/Bitwise_Operators/Sum_using_only_bitwise_ops.jsp> [retrieved on 20200805]
- ANDREAS M ANTONOPOULOS: "Mastering Bitcoin", 21 July 2017 (2017-07-21), XP055570487, ISBN: 978-1-4919-5438-6, Retrieved from the Internet <URL:https://www.oreilly.com/library/view/mastering-bitcoin-2nd/9781491954379/> [retrieved on 20190318]
- ANONYMOUS: "bit manipulation - How to perform multiplication, using bitwise operators? - Stack Overflow", 9 November 2011 (2011-11-09), XP055720701, Retrieved from the Internet <URL:https://stackoverflow.com/questions/3722004/how-to-perform-multiplication-using-bitwise-operators/28158393> [retrieved on 20200806]

## Description

### Technical Field

This disclosure relates generally to a knowledge proof system for blockchain transactions, and more particularly to an on-chain non-interactive implementation of a knowledge proof system. The disclosure is particularly suited, but not limited to, use in a signature scheme for arbitrary data authentication.

### Background

In this document we use the term 'blockchain' to include all forms of electronic, computer-based, distributed ledgers. These include consensus-based blockchain and transaction-chain technologies, permissioned and un-permissioned ledgers, shared ledgers and variations thereof. The most widely known application of blockchain technology is the Bitcoin ledger, although other blockchain implementations have been proposed and developed. While Bitcoin may be referred to herein for the purpose of convenience and illustration, it should be noted that this disclosure is not limited to use with the Bitcoin blockchain and alternative blockchain implementations and protocols fall within the scope of the present disclosure. The term "user" may refer herein to a human or a processor-based resource.

A blockchain is a peer-to-peer, electronic ledger which is implemented as a computer-based decentralised, distributed system made up of blocks which in turn are made up of transactions. Each transaction is a data structure that encodes the transfer of control of a digital asset between participants in the blockchain system, and includes at least one input and at least one output. Each block contains a hash of the previous block so that blocks become chained together to create a permanent, unalterable record of all transactions which have been written to the blockchain since its inception. Transactions contain small programs known as scripts embedded into their inputs and outputs, which specify how and by whom the outputs of the transactions can be accessed. On the Bitcoin platform, these scripts are written using a stack-based scripting language.

In order for a transaction to be written to the blockchain, it must be "validated". Network nodes (miners) perform work to ensure that each transaction is valid, with invalid transactions rejected from the network. Software clients installed on the nodes perform this validation work on an unspent transaction (UTXO) by executing its locking and unlocking scripts. If execution of the locking and unlocking scripts evaluate to TRUE, the transaction is valid and the transaction is written to the blockchain. Thus, in order for a transaction to be written to the blockchain, it must be i) validated by the first node that receives the transaction - if the transaction is validated, the node relays it to the other nodes in the network; and ii) added to a new block built by a miner; and iii) mined, i.e. added to the public ledger of past transactions.

Although blockchain technology is most widely known for the use of cryptocurrency implementation, digital entrepreneurs have begun exploring the use of both the cryptographic security system Bitcoin is based on and the data that can be stored on the Blockchain to implement new systems. It would be highly advantageous if the blockchain could be used for automated tasks and processes which are not limited to the realm of cryptocurrency. Such solutions would be able to harness the benefits of the blockchain (e.g. a permanent, tamper proof records of events, distributed processing etc) while being more versatile in their applications.

One area of current research is the use of the blockchain for the implementation of "smart contracts". These are computer programs designed to automate the execution of the terms of a machine-readable contract or agreement. Unlike a traditional contract which would be written in natural language, a smart contract is a machine executable program which comprises rules that can process inputs in order to produce results, which can then cause actions to be performed dependent upon those results.

Another area of blockchain-related interest is the use of 'tokens' (or 'coloured coins') to represent and transfer real-world entities via the blockchain. A potentially sensitive or secret item can be represented by the token which has no discernable meaning or value. The token thus serves as an identifier that allows the real-world item to be referenced from the blockchain.

Knowledge proof is a cryptographic system that allows one party to prove to another party that he or she knows a secret without revealing any information on the secret. There are many instantiations of a knowledge proof system. However, most of them are computationally costly.

Thus, it is desirable to provide a knowledge proof system for blockchain transaction which is more computationally efficient than existing knowledge proof systems.

Such an improved solution has now been devised.

The prior art is known from Thaddeus Dryja: "Discreet Log Contracts", 15 July 2017 (2017-07-15), retrieved from the Internet: URL: https:/adiabat.github.io/dlc.pdf.

### Summary

There is provided a method as defined in the appended claims.

According to an aspect of the present disclosure, there is provided a computer implemented method as defined in claim 1.

According to another aspect of the present disclosure, there is provided a computer implemented system as defined in claim 13.

According to a further aspect of the present disclosure, there is provided a non-transitory computer-readable storage medium as defined in claim 14.

There may be provided a method of enabling knowledge proof in a blockchain transaction, the method comprising:
sending, from a verifier to a prover, a blockchain transaction redeemable by means of data including (i) first data based on a combination of an ephemeral key, second data and a private key of a public-private key pair of a cryptography system, wherein the public key is based on an integer generator raised to a first power, wherein the first power is based on the private key, and wherein knowledge of the private key is required in order to determine the ephemeral key from the first data, and (ii) third data based on the integer generator raised to a second power, wherein the second power is based on the ephemeral key.

There may be provided a computer implemented method of determining the value of 2 raised to a power of an integer, the method comprising:
determining coefficients of terms of a series of powers of 2, wherein each term of the series comprises a respective power of 2 multiplied by a respective said coefficient, wherein the respective said coefficient of each said term is 0 or 1, and the sum of said terms is equal to said integer; and
determining said coefficients having a respective value of 1;
determining a product of a plurality of values, wherein each said value is 2 raised to a respective power of 2 corresponding to each term of the series for which the corresponding said coefficient has a value of 1.

There may be provided a computer implemented method of adding two integers in a blockchain transaction, the method comprising:
representing the integers as a pair of binary bit strings;
performing, on said pair of binary bit strings as inputs, a combination step comprising (i) XOR combining pairs of corresponding respective bits of said inputs to generate a first output binary bit string, and (ii) AND combining pairs of corresponding respective bits of said inputs to generate a further bit string and concatenating, as least significant bit, a bit of value 0 to said further bit string to generate a second output binary bit string; and
if said second output binary bit string contains any bits of value 1, repeating said combination step using as inputs the outputs of the previous said combination step until a said second output binary bit string containing only bits of value 0 is generated.

There may be provided a method of determining a product of two integers in a blockchain transaction, the method comprising:
representing first and second integers as respective first and second binary bit strings;
for each bit of the first integer having a value of 1, providing a respective stored bit string comprising the bit string representing the second integer and a number of bits of value 0 added thereto as least significant bits, the number being equal to the power of 2 represented by the corresponding bit of the first integer having a value of 1; and
adding together the stored bit strings by means of at least one method as defined above.

There may be provided a method of determining an integer in modular arithmetic, the method comprising:
determining coefficients of terms of a series of powers of 2 (mod p), wherein each term of the series comprises a respective power of 2 (mod p) multiplied by a respective said coefficient, wherein the respective said coefficient of each said term is 0 or 1, and the sum of said terms is equal to said integer (mod p);
storing a plurality of values, wherein each said value is 2 raised to a respective power of 2 (mod p) corresponding to each term of the series for which the corresponding said coefficient has a value of 1; and
adding together the plurality of values by means of at least one method as defined above.

There may be provided a system, comprising:
a processor; and
memory including executable instructions that, as a result of execution by the processor, causes the system to perform any embodiment of the computer-implemented method described herein.

There may be provided a non-transitory computer-readable storage medium having stored thereon executable instructions that, as a result of being executed by a processor of a computer system, cause the computer system to at least perform an embodiment of the computer-implemented method described herein.

### Brief Description of the Drawings

Various embodiments in accordance with the present disclosure will be described with reference to the drawings, in which:
Figure 1 shows execution of a script of a blockchain transaction for carrying out knowledge proof;
Figure 2 shows execution of a script of a blockchain transaction for determining a large power of 2;
Figure 3 shows execution of a script of a blockchain transaction of a specific example of the script shown in Figure 2;
Figure 4 shows execution of a script of a blockchain transaction for determining a sum of two large integers;
Figure 5 shows execution of a script of a blockchain transaction for determining a product of two large integers;
Figure 6 shows execution of a script of a blockchain transaction for determining a large integer in modular arithmetic; and
Figure 7 is a schematic diagram illustrating a computing environment in which various embodiments can be implemented.

### Description of Embodiments

The knowledge proof system of the present disclosure is an implementation of Schnorr's identification scheme [C.P. Schnorr (1990). 'Efficient Identification and Signatures for Cards' in G. Brassard ed. Adv. In Cryptology - Crypt 239-252. Springer Verlag (1990) Lecture Notes in Computer Science nr 435]. The scheme is not only conceptually simple, but it also only uses OP codes that are defined in the original bitcoin protocol. As a result, it can be easily embedded in a script in a transaction. An on-chain non-interactive implementation of the knowledge proof system is described, as well as two other implementations including a transform to a signature scheme for arbitrary data authentication.

The following remarks and user cases of the present disclosure should be noted. The knowledge proof system can be embedded in as few as one transaction if the public verification key is available elsewhere. Also, the payment can be spent only if the receiver knows the secret value. In particular, public keys (verification keys) do not have to be visible to the public or included in the transaction. This will provide full privacy for the receiver. Also, security can be adjusted by choosing different primes. This will provide the flexibility in trade-off between efficiency and security.

When proof of knowledge implies proof of ownership, the solution becomes a smart contract that says the funding is released only if the receiver can prove the ownership of some asset. As an example, a land registry office can implement the same knowledge proof system to record the ownership of properties. The land registry office can have a certified verification key list, where each owner is given their corresponding secret value. To prove an ownership of a property, the owner can simply construct a knowledge proof given a challenge. It is important to note that the verification key does not have to be included in the transactions. It can be hidden in a calculation.

Another example could be any token system that implements the knowledge proof system. Similarly, as above, the ownership of some tokens can be proved by constructing a knowledge proof of a secret value. The solution can also be used in rental services, where the key to unlock the rented property is the knowledge proof which can be obtained by initiating a transaction that contains the same challenge. For example, in order to access a rented car, or a house, the renter will receive a challenge to provide a knowledge proof from the locked door. The renter then constructs a transaction containing the challenge. The owner of the property will reveal the knowledge proof on accepting the payment, and therefore reveal the knowledge proof required to unlock the car or the door to the house.

The disclosure can also be a solution to asset transfer that involves a third party. For example, a lawyer (third party) is instructed by a will of his client to release a fund only to the person who knows the secret value.

Before outlining the specific embodiments of the disclosure, Schnorr's original protocol here [C.P. Schnorr (1990). 'Efficient Identification and Signatures for Cards' in G. Brassard ed. Adv. In Cryptology - Crypt 239-252. Springer Verlag (1990) Lecture Notes in Computer Science nr 435] is disclosed.
*Setup (Public):*
   1. Pick a prime *p*
   2. Pick a prime *q* such that *q*|*p -* 1 (i.e. p - 1 is divisible by q) and
   2*^{q}* ≡ 1 *mod p*
   The public parameters are (*p, q*)
*KeyGen (Prover):*
   1. Randomly pick $s ∈ {ℤ}_{q}$
   2. Calculate *v* ≡ 2⁻*^{s} mod p*
      The secret value is s and the public verification key is *v*
   3. Send *v* to Verifier
*Challenge (Verifier):*
   1. Randomly pick $c ∈ {ℤ}_{q}$
   2. Send *c* to Prover
*Prove (Prover):*
   1. Randomly pick $r ∈ {ℤ}_{q}$
   2. Calculate *x* ≡ 2*^{r}mod p*
   3. Calculate *y* ≡ *r + s · c mod q*
   4. Send *(x, y)* to Verifier
*Verify (Verifier):*
   1. Calculate *x'* ≡ 2*^{y}* · *v^{c} mod p*
   2. Compare *x'* with *x*

For the public parameters, they represent a subgroup of order q of the multiplicative group, ${ℤ}_{p}^{∗}$*.* The condition that 2*^{q}* ≡ 1 *mod* p is to have 2 as the subgroup generator. This improves the efficiency in exponentiation significantly.

The security of the scheme is based on the discrete logarithm problem. For a group of size *N,* the security is roughly $\sqrt{N}$. For example, if q is of 256 bits, then the security of the scheme is roughly 128 bits. That is, it takes an attacker about 2¹²⁸ operations to break the system.

For reference, the signature scheme that is obtained via the Fiat-Shamir Transform is also presented as follows:
*Setup (Public):*
   1. Pick a prime *p*
   2. Pick a prime *q* such that *q* |*p* - 1 and 2*^{q}* ≡ 1 *mod p*
*KeyGen (Signer):*
   1. Randomly pick $s ∈ {ℤ}_{q}$
   2. Calculate *v* ≡ 2⁻*^{s} mod p*
      The secret key is *s* and the public key is *v*
*Sign (Signer given a message m):*
   1. Randomly pick $r ∈ {ℤ}_{q}$
   2. Calculate *x* ≡ 2*^{r}*mod *p*
   3. Calculate *c* = *H*(*x*∥*m*) mod *q*
   4. Calculate *y* ≡ *r + s* · *c* mod *p*
   5. Send (*m, x, y*) to the verifier
*Verify (Verifier):*
   1. Calculate *c* = *H*(*x∥m*) mod *q*
   2. Calculate *x'* ≡ 2*^{y}* · *v^{c} mod p*
   3. Compare *x'* with *x*

It should be noted that the main difference between the knowledge proof and signature schemes is the replacement of the challenge *c* with *H*(*x*∥*m*) mod *q.*

### Knowledge Proof in Transactions

### Non-interactive Transaction

A transaction from Bob to Alice is described, in which case Alice can spend the payment only if Alice provide a knowledge proof.

It is assumed that Bob has a copy of the public parameters (*p, q*) and Alice's verification key *v* either from Alice herself or from a verifiable source.

Bob can simply construct the transaction and include the following outputs:
***Transaction 1 - from Bob to Alice:***
*Output 1:*
Value: 10.00000000
Locking Script: "< 2 > OP_SWAP OP_LSHIFT *< v^{c} mod p* > OP_MUL < *p* > OP_MOD OP _NUMEQUAL"
It is assumed that *v^{c} mod* p is calculated by Bob off-block, and the value entry is arbitrary. To achieve perfect privacy, Bob sends to Alice the challenge *c* off-chain, or they have some shared randomness as the challenge.

For Alice to spend the payment, she simply computes *x* and *y* as instructed in the protocol, and construct a transaction with the unlocking script as the following:

### Spending Transaction 1

### Unlocking script: "<Alice's public key> < x > < y >"

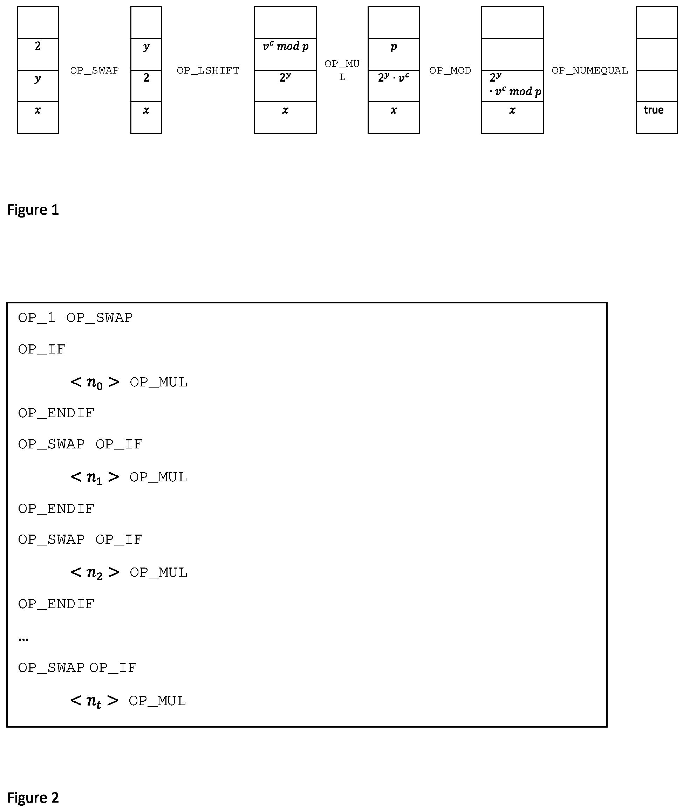

To verify the transaction, the scripts are executed as shown in Figure 1:
**Execution:**
"< *x > < y >* < 2 > OP_SWAP OP_LSHIFT < *v^{c}mod p* > OP_MUL < p > OP_MOD OP _NUMEQUAL"

It should be noted that *v^{c} mod p* can be pre-calculated and put in the script. This not only saves the computation to enable in-script verification, but also hides the public verification key.

In order to protect the integrity of the outputs of the transaction that Alice creates, an ECDSA signature request id appended to the locking script in Bob's transaction. Namely:
Locking Script: "< 2 > OP_SWAP OP_LSHIFT < *v^{c} mod p* > OP_MUL < *p* > OP_MOD OP_NUMEQUAL OP_IF OP_DUP OP_HASH160 <Hash of Alice's public key> OP_EQUALVERITY OP_CHECKSIG".

In response, when Alice spends that transaction, she will sign the new transaction with her ECDSA signature. Namely:
Unlocking script: "<Alice's signature> <Alice's public key> *< x* > *< y* >"

In the case of y being a large number, it is necessary to implement a more complicated script to calculate 2*^{y} mod* p, which involves bitwise calculations. The implementation will be possible if the current cap on the maximum number of opcodes is significantly lifted. The script is shown in detail in Figure 2.

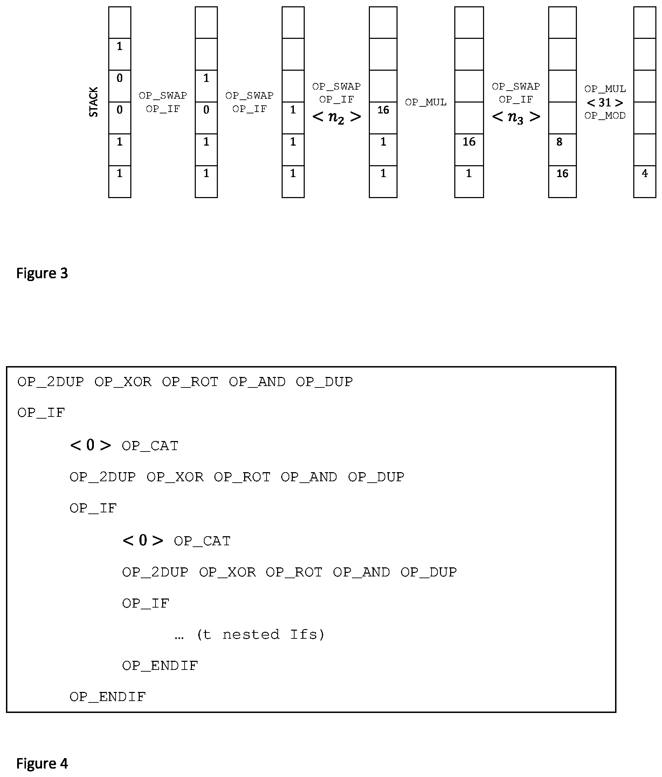

It has been assumed that the arithmetic opcodes used are equipped with the big integer library, which was the case in the bitcoin original protocol. However, other embodiments are shown in detail in Figures 4 to 6 that simulate big integer arithmetic operations using string operations.

### Calculating 2^{y} mod p:

The script shown in Figure 2 is executed by implementing the following steps:
1. Write y = *y*₀2⁰ + *y*₁2¹ + ··· *+ yₜ*2*^{t}* where *yᵢ* ∈ {0,1} for *i* = 0,1*, ..., t ,* which is the binary representation of y.
2. Let *nᵢ* = 2²*ⁱ mod* p be pre-calculated.
3. Note that ${2}^{y} = {n}_{0}^{{y}_{0}} {n}_{1}^{{y}_{1}} … {n}_{t}^{{y}_{t}} mod p$ and ${n}_{i}^{{y}_{i}} = {n}_{i}$ when *yᵢ* = 1.
4. Assuming *y* is pushed to the stack as (*y*₀*, y*₁, *..., yₜ*) with *y*₀ being on the top stack:

Now the top stack will have 2*^{y} mod p.*

It should be noted that the current maximum stack depth is 1000. If 128 bits of security is to be achieved, then y will be of 256 bits. Therefore, the current cap on stack depth is not a problem.

An example of the execution of the script shown in Figure 2 is shown in detail in Figure 3.

Example: calculate 2¹² *mod* 31
1. Write 12 = 2² + 2³
2. Pre-calculate *n*₀, *n*₁, *n*₂, *n*₃ as 2, 4, 16, 8.
3. Push (1,1,0,0) to the stack one by one followed by OP_1.

The script of Figure 2 is then executed as shown in Figure 3.

### One Round Transactions

If there is a requirement for on-chain communication, it is straightforward for Alice to initiate the communication by sending Bob a transaction and pass on the public verification key.

### Transaction 0 - from Alice to Bob:

*Output 1:*
   Value: 0.00000600
   Locking Script: "OP_DUP OP_HASH160 <Hash of Bob's public key> OP_EQUALVERIFY OP_CHECKSIG"
*Output 2:*
   Value: 0.00000000
   Locking Script: "OP_RETURN *v*"

It should be noted that Output 1 is there to simply cover the transaction fee for miners. Output 2 can also be included in Output 1 using "<*v*> OP_DROP".

The second leg of the round will be the transaction described in the non-interactive case plus the challenge c embedded in the locking script. This can be done either using a new output with OP_RETURN, or adding "< *c* > OP_DROP" to the existing locking script.

### Implementation as a Signature Scheme

The Schnorr scheme can also be used as a method for source verification of arbitrary data types, in other words, a digital signature scheme. As of now, any digital signature scheme that involves large integer exponentiations is avoided in bitcoin due to its heavy computational cost. Since it is possible to pre-calculate the costly exponentiation off-chain, the Schnorr signature scheme described above can be implemented in bitcoin script. The important technical difference between the knowledge proof and digital signature is that for the digital signature the challenge issued by the verifier is the hash of the message or data and ephemeral public key used in the signature (see above).

The difficulty here is that Bob does not know the ephemeral public key before any signatures. One way to overcome that is for the signer to send the ephemeral public key before Bob creates the transaction. A better way would be to have a set of shared ephemeral public keys between the signer and Bob.

For example, Bob wants to send some bitcoin to Alice, which she can only spend if she provides a valid signature (*x, y*) for the message *m* by a signer with public key *v* who is trusted by Bob. He can construct the following transaction:
***Transaction 1 - from Bob to Alice:***
*Output 0:*
Value: 10.00000000
Locking Script: "< *x >* OP_SWAP OP_CAT OP_HASH256 < *q* > OP_MOD < c > OP _EQUALVERIFY < 2 > OP_SWAP OP_LSHIFT < *v^{c} mod p* > OP_MUL < p > OP_MOD OP_NUMEQUAL OP_DUP OP_HASH160 <Hash of Alice's public key> OP_EQUALVERIFY OP_CHECKSIG"

It is assumed that *v^{c} mod p* is calculated by Bob off-chain.

To spend the payment from Bob, Alice first obtains a signature *(x, y)* from the signer on the message m.

It should be noted that both *x* and m are fixed in the locking script by the equation *c* = *H*(*x*∥*m*) mod *q.* The value of *y* becomes the key to provide authenticity.

Alice then can construct a transaction with the following unlocking script:

### Spending Transaction 1

Unlocking script: <Alice's signature> <Alice's public key> < *x > < y* >< m >

It should be noted that this script does not require Alice to create the signature for *m*, only provide the signature created by the signer with public key *v*. The last 4 opcodes (from OP_DUP to OP_CHECKSIG) of the locking script set out above ensure that Alice's private key is also required to spend the transaction.

The signature scheme implementation does not provide the same level of privacy as the knowledge proof system implementation, because the challenge *c* has to be included in the locking script together with *v^{c} mod p*. It is not computationally difficult to derive *v* from *c* and *v^{c} mod p.*

The message being signed must also be known to the verifier, who provides both *c*(≡ *H*(*x*∥*m*) mod *q*) and *v^{c}* in the locking script. Whilst this limits the ability of the implementation to provide a method for verification of undetermined data, if the message space is small a verifier can use flow control opcodes to first determine the message and then the Schnorr scheme to authenticate.

For example, Bob creates a transaction that requires the approval of a third party (Carol) if Alice wishes to spend it. In this case the message being signed is a Boolean value i.e. *m* ∈ {*m*₁, *m*₂} where *m*₁ *= 'Yes' , m*₂ *= 'No'.* Bob does not know which message will be included as part of the unlocking script but wants to verify that it has been signed by Carol with public key *v.* If the message from Carol is '*Yes*' then Alice can spend, if it is *'No'* then it is returned to Bob.

The corresponding challenges to *m*₁ and *m*₂ are *c*₁ *= H*(*x*₁∥*m*₁) and *c*₂ = *H*(*x*₂∥*m*₂) respectively. Bob creates the following locking script:
***Transaction 2 - from Bob to Alice:***
*Output 0:*
Value: 10.00000000
Locking Script:
   "< *x*₁ > OP_SWAP OP_CAT OP_HASH256 < *q* > OP_MOD < *c*₁ > OP_EQUAL OP_IF < 2 > OP_SWAP OP_LSHIFT < *v*^{*c*1} *mod p* > OP_MUL < *p* > OP_MOD OP_NUMEQUAL OP_DUP OP_HASH160 <Hash of Alice's public key> OP _EQUALVERIFY OP_CHECKSIG OP_ENDIF
   < *x*₂ > OP_SWAP OP_CAT OP_HASH256 *< q* > OP_MOD < *c*₂ > OP_EQUAL OP_IF < 2 > OP_SWAP OP_LSHIFT < *v*^{*c*2} *mod p* > OP_MUL < *p* > OP_MOD OP_NUMEQUAL OP_DUP OP_HASH160 <Hash of Bob's public key> OP_EQUALVERIFY OP_CHECKSIG OP_ENDIF"

The locking script first checks the message is either *m*₁ or *m*₂ and verifies that it has been signed by Carol and finally checks that the rightful spender is unlocking the transaction. If, for example the message Carol wishes to sign is *m*₁ = *'Yes'* then she can generate a signature (*x*₁, *y*₁) corresponding to her chosen message and send the message/signature to Alice. Alice can then create the following unlocking script to spend the transaction:

### Spending Transaction 2

Unlocking script: < *Alice Sig.> < Alice PubKey >* < *x*₁ *>* < *y*₁ >< *m*₁ >

This data scheme lays the foundation for secure data source verification using bitcoin script. If Bob wishes to attach additional spending criteria dependent on the message/data (for example in a smart contract) then additional script can included in Transaction 2.

### Calculating x + y:

A script for adding two large integers together is shown in detail in Figure 4. It is assumed that the integers *(x, y)* are pushed to the stack as two binary strings. This script will be denoted as FUNC_STRINGADD in further embodiments.

### The theory behind the addition

Let *a*₀ and *b*₀ be two binary strings of length *t*. We define: ${a}_{i + 1} = {a}_{i} ⊕ {b}_{i}$ $\left.{b}_{i + 1}={a}_{i}∧{b}_{i}\right‖ 0$ where ⊕ represents bitwise XOR operation, and A represents bitwise AND operation. When the process is repeated a sufficient number of times that *bₖ* = 00 ... 0, a string of zeros, then *aₖ* is the binary string that represents *a*₀ + *b*₀*.*

Proof:
It should be noted that XOR simulates addition bitwise in the sense that all carries are not considered. $0 + 0 = 0 ⊕ 0$ $0 + 1 = 1 + 0 = 1 ⊕ 0 = 0 ⊕ 1$ $1 + 1 = 1 ⊕ 1 ⋆$

The only problem is 1 + 1 is not 0. However, A operation can be used to identify this scenario, because A will indicate at which position this problem occurred by flagging it with 1. It should be noted that these ones in the result indicate the carries that are part of the addition. By concatenating the result with 0, we effectively create a number that captures all the carries. This process can be iterated until there are no more carries in the addition.

### Proof by induction:

We want to prove that *a*₀ + *b*₀ = *a*₁ *+ b*₁ = ··· *= aₙ + bₙ* for all *n* ≥ 1.

First, we want to prove *a*₀ + *b*₀ = *a*₁ *+ b*₁.

Let *a*₀ = *a*₀₀ ... *a*_{0*t*-1} and *b*₀ = *b*₀₀*b*₀₁ ... *b*_{0*t*-1} for some integer *t.*

When *t* = 1, we have *a*₀ = *a*₀₀ and *b*₀ = *b*₀₀*.* So, the left-hand side is simply *a*₀₀ + *b*₀₀.

The right-hand side is $\left.{a}_{1}+{b}_{1}={a}_{00}⊕{b}_{00}+{a}_{00}∧{b}_{00}\right‖ 0$

By going through all possible values of *a*₀₀ and *b*₀₀ as shown in the Table 1 below, we can conclude that the statement is true for *t* = 1.

**Table 1**

| (*a*₀₀, *b*₀₀) | Left-hand side | *a*₀₀ ⊕ *b*₀₀ | *a*₀₀ ∧ *b*₀₀ ∥ 0 | Right-hand side |
|---|---|---|---|---|
| (0,0) | 0 | 0 | 00 | 0 |
| (0,1) | 1 | 1 | 00 | 1 |
| (1,0) | 1 | 1 | 00 | 1 |
| (1,1) | 10 | 0 | 10 | 10 |

Assume the statement is true for *t = k* for some *k* ≥ 1. We want to prove that the statement is true for *t = k +* 1. $l . h . s . = {a}_{0} + {b}_{0} = {\sum }_{i = 0}^{k} \left({a}_{0 i}+{b}_{0 i}\right) ⋅ {2}^{k - i} = \left[{\sum }_{i = 0}^{k - 1} \left({a}_{0 i}+{b}_{0 i}\right) ⋅ {2}^{k - 1 - i}\right] + \left({a}_{0 k}+{b}_{0 k}\right)$ $\begin{matrix}r . h . s . = {a}_{1} + {b}_{1} = {\sum }_{i = 0}^{k} \left({a}_{0 i}⊕{b}_{0 i}\right) ⋅ {2}^{k - i} + \left({a}_{0 i}∧{b}_{0 i}\left‖0\right.\right) ⋅ {2}^{k - i} \\ = \left[{\sum }_{i = 0}^{k - 1} \left({a}_{0 i}⊕{b}_{0 i}\right) ⋅ {2}^{k - 1 - i} + \left({a}_{0 i}∧{b}_{0 i}\left‖0\right.\right) ⋅ {2}^{k - 1 - i}\right] + \left({a}_{0 k}⊕{b}_{0 k}\right) \\ + \left({a}_{0 k}∧{b}_{0 k}\left‖0\right.\right) = \left[{\sum }_{i = 0}^{k - 1} \left({a}_{0 i}+{b}_{0 i}\right) ⋅ {2}^{k - 1 - i}\right] + \left({a}_{0 k}+{b}_{0 k}\right) = l . h . s .\end{matrix}$

It should be noted that the fact that the statement is true for *t = k* has been used. That is: ${\sum }_{i = 0}^{k - 1} \left({a}_{0 i}⊕{b}_{0 i}\right) ⋅ {2}^{k - 1 - i} + \left({a}_{0 i}∧{b}_{0 i}\left‖0\right.\right) ⋅ {2}^{k - 1 - i} = {\sum }_{i = 0}^{k - 1} \left({a}_{0 i}+{b}_{0 i}\right) ⋅ {2}^{k - 1 - i}$

Also, the fact that: $\left.{a}_{0 i}∧{b}_{0 i}⋅2={a}_{0 i}∧{b}_{0 i}\right‖ 0$ has been used. Multiplying by 2 is the same as shifting the bit string to the left by one position and appending 0 at the end.

The last equality in the deduction comes from the Table 1 above again.

Since it has been proved that the statement is true for *t = k +* 1 given it is true for *t = k,* by induction, it can be concluded that *a*₀ + *b*₀ *= a*₁ *+ b*₁ is true for all integer *t* ≥ 1.

It should be noted that *a*₁ and *b*₁ are just two binary strings representing two numbers as *a*₀ and *b*₀. Without loss of generality, by repeating the proof above, it can be concluded that *a*₀ + *b*₀ *= a*₁ *+ b*₁ *=* ··· = *aₙ + bₙ* for all *n* ≥ 1. Consequently, when the process is iterated until one of the outputs consists entirely of bits having value 0, it can be concluded that the other output represents the sum of the two initial inputs.

### Calculating x · y:

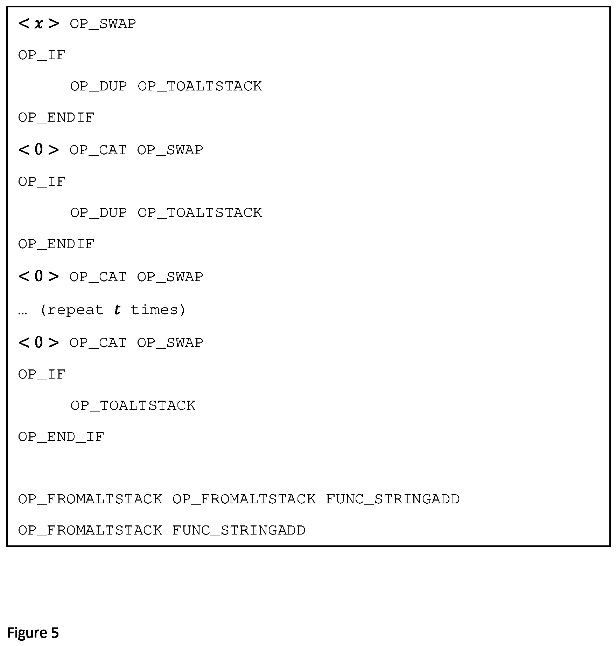

A script for multiplying two large integers together is shown in detail in Figure 5.

One of the integers, *y*, is written as *y* = *y*₀2⁰ + *y*₁2¹ *+* ··· *+ yₜ*2*^{t}* where *yᵢ* ∈ {0,1} for *i* = *0,1,* ... , *t* . It is assumed *y* is pushed to the stack as (*y*₀, *y*₁, *..., yₜ*) with *y*₀ being on the top stack.

The script then saves a value of the other integer, x, with a number of bits of value 0 corresponding to the power of 2 represented by each non-zero value of yᵢ, added as least significant bits. These values are then added to each other by means of the FUNC_STRINGADD process described above with reference to Figure 4.

### Calculating y mod p:

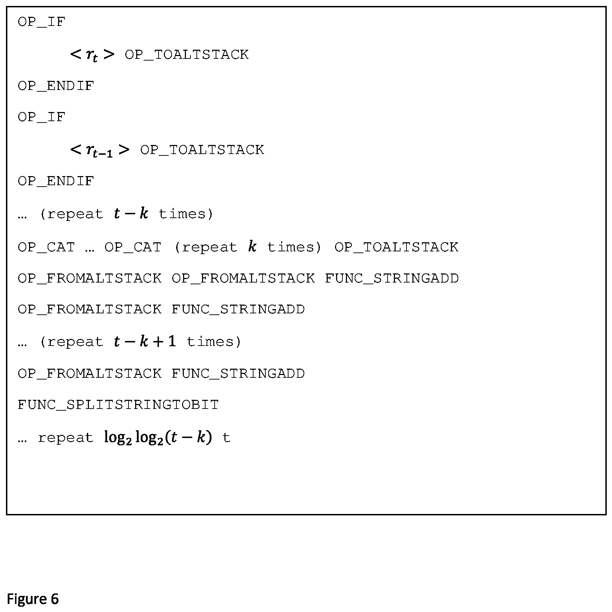

A script for calculating a large integer in modular arithmetic is shown in detail in Figure 6. The values *rᵢ* ≡ 2*ⁱ mod* p are first pre-calculated for *i = k -* 1*, **...*** , *t* where *k* is the bit length of *p*. It is assumed y is pushed to the stack as (*y*₀, *y*₁, *... , yₜ*) with *yₜ* being on the top stack.

Finally, FUNC_SPLITSTRINGTOBIT is defined to take an input of binary string and put each bit vertically on the stack. This can be achieved by using OP_SUBSTR.

### Conclusion

A protocol implementation has been described that enables a payment from Bob to Alice that can be spent only if Alice knows a secret value. The advantages of the present disclosure come from its simplicity, security, usefulness and being compatible with the most secure and trusted bitcoin original protocol.

The choice of using an integer representation instead of elliptic curve representation makes it much simpler to implement and understand. The fact that only the public key to the power of a random number is required to be published provides the security in terms of privacy of the receiver. Moreover, the value can be pre-calculated to enable on-chain verification and save the computation.

An innovative and efficient implementation of exponentiation modulo a prime has also been described. This enables the knowledge proof system to be embedded in a script in a standard transaction that would be accepted by the miners in the bitcoin network. As a byproduct, an implementation of a signature scheme is also provided that allows in-script arbitrary data authentication and verification. Moreover, all the standard properties and extensions of Schnorr the signature scheme apply. For example, the batch validation enables the verification on multiple signatures in one step by aggregating them first. Another example is the extension to threshold signatures which is an alternative to MULTISIG in bitcoin.

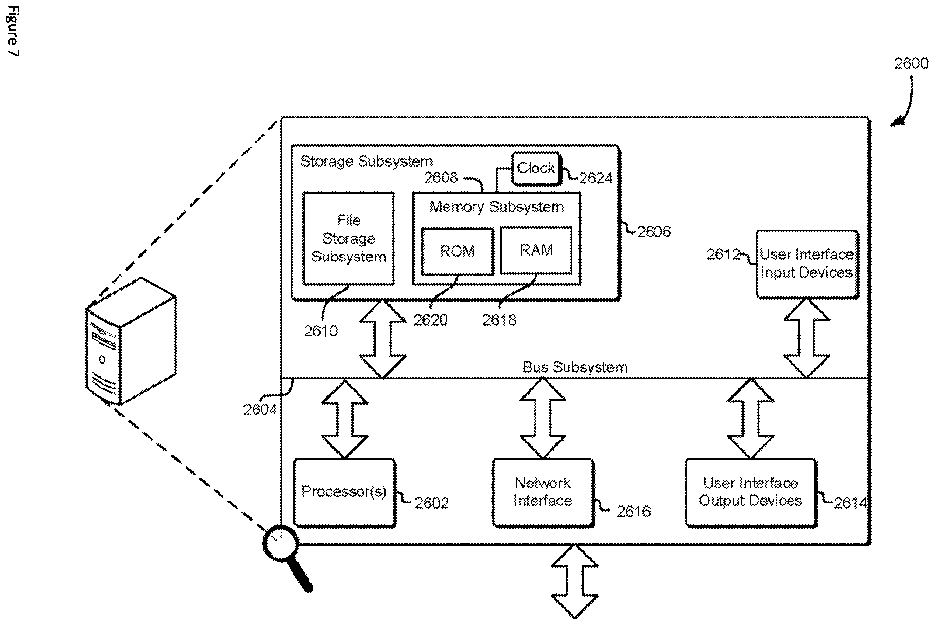

Turning now to Figure 7, there is provided an illustrative, simplified block diagram of a computing device 2600 that may be used to practice at least one embodiment of the present disclosure. In various embodiments, the computing device 2600 may be used to implement any of the systems illustrated and described above. For example, the computing device 2600 may be configured for use as a data server, a web server, a portable computing device, a personal computer, or any electronic computing device. As shown in Figure 7, the computing device 2600 may include one or more processors with one or more levels of cache memory and a memory controller (collectively labelled 2602) that can be configured to communicate with a storage subsystem 2606 that includes main memory 2608 and persistent storage 2610. The main memory 2608 can include dynamic random-access memory (DRAM) 2618 and read-only memory (ROM) 2620 as shown. The storage subsystem 2606 and the cache memory 2602 and may be used for storage of information, such as details associated with transactions and blocks as described in the present disclosure. The processor(s) 2602 may be utilized to provide the steps or functionality of any embodiment as described in the present disclosure.

The processor(s) 2602 can also communicate with one or more user interface input devices 2612, one or more user interface output devices 2614, and a network interface subsystem 2616.

A bus subsystem 2604 may provide a mechanism for enabling the various components and subsystems of computing device 2600 to communicate with each other as intended. Although the bus subsystem 2604 is shown schematically as a single bus, alternative embodiments of the bus subsystem may utilize multiple busses.

The network interface subsystem 2616 may provide an interface to other computing devices and networks. The network interface subsystem 2616 may serve as an interface for receiving data from, and transmitting data to, other systems from the computing device 2600. For example, the network interface subsystem 2616 may enable a data technician to connect the device to a network such that the data technician may be able to transmit data to the device and receive data from the device while in a remote location, such as a data centre.

The user interface input devices 2612 may include one or more user input devices such as a keyboard; pointing devices such as an integrated mouse, trackball, touchpad, or graphics tablet; a scanner; a barcode scanner; a touch screen incorporated into the display; audio input devices such as voice recognition systems, microphones; and other types of input devices. In general, use of the term "input device" is intended to include all possible types of devices and mechanisms for inputting information to the computing device 2600.

The one or more user interface output devices 2614 may include a display subsystem, a printer, or non-visual displays such as audio output devices, etc. The display subsystem may be a cathode ray tube (CRT), a flat-panel device such as a liquid crystal display (LCD), light emitting diode (LED) display, or a projection or other display device. In general, use of the term "output device" is intended to include all possible types of devices and mechanisms for outputting information from the computing device 2600. The one or more user interface output devices 2614 may be used, for example, to present user interfaces to facilitate user interaction with applications performing processes described and variations therein, when such interaction may be appropriate.

The storage subsystem 2606 may provide a computer-readable storage medium for storing the basic programming and data constructs that may provide the functionality of at least one embodiment of the present disclosure. The applications (programs, code modules, instructions), when executed by one or more processors, may provide the functionality of one or more embodiments of the present disclosure, and may be stored in the storage subsystem 2606. These application modules or instructions may be executed by the one or more processors 2602. The storage subsystem 2606 may additionally provide a repository for storing data used in accordance with the present disclosure. For example, the main memory 2608 and cache memory 2602 can provide volatile storage for program and data. The persistent storage 2610 can provide persistent (non-volatile) storage for program and data and may include flash memory, one or more solid state drives, one or more magnetic hard disk drives, one or more floppy disk drives with associated removable media, one or more optical drives (e.g. CD-ROM or DVD or Blue-Ray) drive with associated removable media, and other like storage media. Such program and data can include programs for carrying out the steps of one or more embodiments as described in the present disclosure as well as data associated with transactions and blocks as described in the present disclosure.

The computing device 2600 may be of various types, including a portable computer device, tablet computer, a workstation, or any other device described below. Additionally, the computing device 2600 may include another device that may be connected to the computing device 2600 through one or more ports (e.g., USB, a headphone jack, Lightning connector, etc.). The device that may be connected to the computing device 2600 may include a plurality of ports configured to accept fibre-optic connectors. Accordingly, this device may be configured to convert optical signals to electrical signals that may be transmitted through the port connecting the device to the computing device 2600 for processing. Due to the ever-changing nature of computers and networks, the description of the computing device 2600 depicted in FIG. 7 is intended only as a specific example for purposes of illustrating the preferred embodiment of the device. Many other configurations having more or fewer components than the system depicted in FIG. 7 are possible.

It should be noted that the above-mentioned embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

### References

| **Reference** | **Author, date, name & location** |
|---|---|
| [1] | C.P. Schnorr (1990). 'Efficient Identification and Signatures for Cards' in G. Brassard ed. Adv. In Cryptology - Crypt 239-252. Springer verlag (1990) lecture notes in Computer Science nr 435. |

## Claims

1. A computer implemented method of enabling knowledge proof in a blockchain transaction, the method comprising:
generating, at a verifier, a first blockchain transaction comprising a locking script, wherein the first blockchain transaction is redeemed by means of a second blockchain transaction comprising an unlocking script including (i) first data based on a combination of an ephemeral key, second data and a private key of a public-private key pair of a cryptography system, wherein the public key is based on an integer generator raised to a first power, wherein the first power is based on the private key, and wherein knowledge of the private key is required in order to determine the ephemeral key from the first data, and (ii) third data based on the integer generator raised to a second power, wherein the second power is based on the ephemeral key.

2. A method according to claim 1, wherein the integer generator is 2.

3. A method according to claim 1 or 2, wherein the second data is selected by the verifier.

4. A method according to any one of the preceding claims, further comprising sending the second data from the verifier to a prover separately from the first blockchain transaction.

5. A method according to any one of the preceding claims, wherein the first data is of the form: $y ≡ r + s ⋅ c mod q ,$ where y is the first data, r is the ephemeral key, s is the private key, c is the second data and q is prime.

6. A method according to any one of the preceding claims, wherein the second data is based on a message.

7. A method according to claim 6, wherein the message includes data for implementing a smart contract.

8. A method according to claim 6 or 7, wherein the second data is of the form: $c ≡ H \left(x\left‖m\right.\right) mod q$ where c is the second data, x is the third data, m is the message, q is prime and H is a hash function.

9. A method according to any one of claims 6 to 8, further comprising receiving the message at the verifier.

10. A method according to any one of the preceding claims, further comprising sharing at least one ephemeral key between the verifier and a prover.

11. A method according to any one of the preceding claims, further comprising receiving said public key at said verifier.

12. A method according to any one of the preceding claims, further comprising receiving said first data and said second data at said verifier.

13. A computer-implemented system comprising:
a processor (2602); and
memory (2608) including executable instructions that, as a result of execution by the processor, causes the system to perform any embodiment of the computer-implemented method as claimed in any of claims 1 to 12.

14. A non-transitory computer-readable storage medium having stored thereon executable instructions that, as a result of being executed by a processor of a computer system, cause the computer system to at least perform an embodiment of the method as claimed in any of claims 1 to 12.

## Patentansprüche

1. Computerimplementiertes Verfahren zum Ermöglichen eines Wissensbeweises in einer Blockchain-Transaktion, wobei das Verfahren Folgendes umfasst:
Erzeugen an einem Verifizierer einer ersten Blockchain-Transaktion, die ein Sperrskript umfasst, wobei die erste Blockchain-Transaktion mittels einer zweiten Blockchain-Transaktion eingelöst wird, die ein Entsperrskript umfasst, das Folgendes einschließt: (i) erste Daten, die auf einer Kombination eines kurzlebigen Schlüssels basieren, zweite Daten und einen privaten Schlüssel eines öffentlichen-privaten Schlüsselpaars eines Verschlüsselungssystems, wobei der öffentliche Schlüssel auf einem Ganzzahlgenerator basiert, der auf eine erste Potenz erhoben wurde, wobei die erste Potenz auf dem privaten Schlüssel basiert, und wobei Kenntnis des privaten Schlüssels notwendig ist, um den kurzlebigen Schlüssel aus den ersten Daten zu bestimmen, und (ii) dritte Daten, die auf dem Ganzzahlgenerator basieren, der auf eine zweite Potenz erhoben wurde, wobei die zweite Potenz auf dem kurzlebigen Schlüssel basiert.

2. Verfahren nach Anspruch 1, wobei der Ganzzahlgenerator 2 ist.

3. Verfahren nach Anspruch 1 oder 2, wobei die zweiten Daten vom Verifizierer ausgewählt werden.

4. Verfahren nach einem der vorstehenden Ansprüche, weiter umfassend das Senden der zweiten Daten vom Verifizierer zu einem Beweiser, getrennt von der ersten Blockchain-Transaktion.

5. Verfahren nach einem der vorstehenden Ansprüche, wobei die ersten Daten in folgender Form sind: $y ≡ r + s ⋅ c mod q ,$ wobei y die ersten Daten sind, r der kurzlebige Schlüssel ist, S der private Schlüssel ist, c die zweiten Daten sind und q eine Primzahl ist.

6. Verfahren nach einem der vorstehenden Ansprüche, wobei die zweiten Daten auf einer Nachricht basieren.

7. Verfahren nach Anspruch 6, wobei die Nachricht Daten zum Implementieren eines intelligenten Vertrags einschließt.

8. Verfahren nach Anspruch 6 oder 7, wobei die zweiten Daten in folgender Form sind: $c ≡ H \left(x\left‖m\right.\right) mod q$ wobei c die zweiten Daten sind, x die dritten Daten sind, m die Nachricht ist, q eine Primzahl ist und H eine Hash-Funktion ist.

9. Verfahren nach einem der Ansprüche 6 bis 8, weiter umfassend das Empfangen der Nachricht am Verifizierer.

10. Verfahren nach einem der vorstehenden Ansprüche, weiter umfassend das Teilen von mindestens einem kurzlebigen Schlüssel zwischen dem Verifizierer und einem Beweiser.

11. Verfahren nach einem der vorstehenden Ansprüche, weiter umfassend das Empfangen des öffentlichen Schlüssels am Verifizierer.

12. Verfahren nach einem der vorstehenden Ansprüche, weiter umfassend das Empfangen der ersten Daten und der zweiten Daten am Verifizierer.

13. Computerimplementiertes System, umfassend:
einen Prozessor (2602); und
Speicher (2608), der ausführbare Anweisungen einschließt, die als Ergebnis der Ausführung durch den Prozessor bewirken, dass das System eine Ausführungsform des computerimplementierten Verfahrens nach einem der Ansprüche 1 bis 12 durchführt.

14. Nichtflüchtiges computerlesbares Speichermedium, das darauf gespeicherte ausführbare Anweisungen aufweist, die als Ergebnis davon, dass sie von einem Prozessor eines Computersystems ausgeführt werden, bewirken, dass das Computersystem mindestens eine Ausführungsform des Verfahrens nach einem der Ansprüche 1 bis 12 durchführt.

## Revendications

1. Procédé mis en œuvre par ordinateur permettant une preuve de connaissance dans une transaction de chaîne de blocs, le procédé comprenant :
le fait de générer, au niveau d'un vérifieur, une première transaction de chaîne de blocs comprenant un script de verrouillage, dans lequel la première transaction de chaîne de blocs est rachetée au moyen d'une deuxième transaction de chaîne de blocs comprenant un script de déverrouillage incluant (i) des premières données basées sur une combinaison d'une clé éphémère, de deuxièmes données et d'une clé privée d'une paire de clés publique-privée d'un système de cryptographie, dans lequel la clé publique est basée sur un générateur d'entiers élevé à une première puissance, dans lequel la première puissance est basée sur la clé privée, et dans lequel la connaissance de la clé privée est requise afin de déterminer la clé éphémère à partir des premières données, et (ii) des troisièmes données basées sur le générateur d'entiers élevé à une deuxième puissance, dans lequel la deuxième puissance est basée sur la clé éphémère.

2. Procédé selon la revendication 1, dans lequel le générateur d'entiers est 2.

3. Procédé selon la revendication 1 ou la revendication 2, dans lequel les deuxièmes données sont sélectionnées par le vérifieur.

4. Procédé selon l'une quelconque des revendications précédentes, comprenant en outre un envoi des deuxièmes données issues du vérifieur à un démonstrateur séparément de la première transaction de chaîne de blocs.

5. Procédé selon l'une quelconque des revendications précédentes, dans lequel les premières données sont de la forme : $y ≡ r + s ⋅ c mod q ,$ où y correspond aux premières données, r est la clé éphémère, s est la clé privée, c correspond aux deuxièmes données et q est premier.

6. Procédé selon l'une quelconque des revendications précédentes, dans lequel les deuxièmes données sont basées sur un message.

7. Procédé selon la revendication 6, dans lequel le message inclut des données pour mettre en œuvre un contrat intelligent.

8. Procédé selon la revendication 6 ou la revendication 7, dans lequel les deuxièmes données sont de la forme : $c ≡ H \left(x\left‖m\right.\right) mod q$ où c correspond aux deuxièmes données, x correspond aux troisièmes données, m est le message, q est premier et H est une fonction de hachage.

9. Procédé selon l'une quelconque des revendications 6 à 8, comprenant en outre une réception du message au niveau du vérifieur.

10. Procédé selon l'une quelconque des revendications précédentes, comprenant en outre un partage d'au moins une clé éphémère entre le vérifieur et un démonstrateur.

11. Procédé selon l'une quelconque des revendications précédentes, comprenant en outre une réception de ladite clé publique au niveau dudit vérifieur.

12. Procédé selon l'une quelconque des revendications précédentes, comprenant en outre une réception desdites premières données et desdites deuxièmes données au niveau dudit vérifieur.

13. Système mis en œuvre par ordinateur comprenant :
un processeur (2602) ; et
une mémoire (2608) incluant des instructions exécutables qui, en conséquence d'une exécution par le processeur, amènent le système à effectuer tout mode de réalisation du procédé mis en œuvre par ordinateur selon l'une quelconque des revendications 1 à 12.

14. Support de stockage non transitoire lisible par ordinateur sur lequel sont stockées des instructions exécutables qui, en conséquence d'une exécution par un processeur d'un système informatique, amènent le système informatique à au moins effectuer un mode de réalisation du procédé selon l'une quelconque des revendications 1 à 12.
